# EUROPÄISCHE PATENTSCHRIFT

(11) **EP 0 337 292 B1**
(45) Veröffentlichungstag und Bekanntmachung des Hinweises auf die Patenterteilung: **04.08.1993**
(21) Anmeldenummer: 89106047.7
(22) Anmeldetag: 06.04.1989
(51) Int. Cl.: G01F 1/60

(54) **Intermittierendes Anlegen einer Spannung an eine Elektrode**
Intermittent voltage application on an electrode
Application intermittente d'une tension à une électrode

(30) Priorität: 13.04.1988 DE 3812309
(43) Veröffentlichungstag der Anmeldung: 18.10.1989
(73) Patentinhaber: Endress + Hauser Flowtec AG, CH-4153 Reinach BL 1 (CH)
(72) Erfinder: Hafner, Peter, Dr., CH-4410 Liestal (CH)
(74) Vertreter: Morstadt, Volker, Dipl.-Ing.

(56) Entgegenhaltungen:
- EP-A- 0 219 725

## Beschreibung

Die Erfindung besteht nach Anspruch 1 in einer Schaltungsanordnung zum Reinigen einer einen Stoff berührenden, ein zu messendes Potential aufweisenden Elektrode durch Anlegen einer elektrischen Gleich- oder Wechselspannung, gekennzeichnet durch eine Spannungsquelle zum Anlegen der Gleich- oder der Wechselspannung an die Elektrode über zwei in Serie liegende Schalter mit je einem Kontaktelement, wobei der erste Schalter an die Spannungsquelle und der zweite Schalter an die Elektrode angeschlossen ist, eine Zeitsteuerung zum zeitlich synchronen Bewegen der Kontaktelemente, wodurch eine Verbindung der Spannungsquelle mit der Elektrode mittels des ersten und des zweiten Schalters gleichzeitig hergestellt oder gleichzeitig unterbrochen werden kann, und einen Impedanzwandler mit hoher Eingangs- und niedriger Ausgangsimpedanz, dessen Eingang an die Elektrode angeschlossen ist und dessen Ausgang mindestens während der Zeitspanne, in der die Verbindung der Spannungsquelle mit der Elektrode gleichzeitig am ersten und am zweiten Schalter unterbrochen ist, mit dem Kontaktelement des zweiten Schalters verbunden ist.

Die Erfindung besteht nach Anspruch 6 ferner in einer Schaltungsanordnung zum Reinigen zweier einen Stoff berührenden, zu messende Potentiale aufweisenden Elektroden durch Anlegen einer elektrischen Gleich- oder Wechselspannung, gekennzeichnet durch eine Spannungsquelle zum Anlegen der Gleich- oder der Wechselspannung und durch Folgendes pro Elektrode: einen Schalter zum Durchschalten der Gleich- oder der Wechselspannung an die Elektrode, einen Impedanzwandler mit hoher Eingangs- und niedriger Ausgangsimpedanz, dessen nicht-invertierender Eingang über den Schalter an die Spannungsquelle anlegbar ist, eine Serienschaltung aus einem Strombegrenzungswiderstand und einer Diode oder zwei antiparallelgeschalteten Dioden, wobei der Ausgang des Impedanzwandlers über die Serienschaltung an der Elektrode angeschlossen ist und der Verbindungspunkt von Strombegrenzungswiderstand und Diode/Dioden am invertierenden Eingang des Impedanzwandlers liegt, sowie einen Operationsverstärkers, dessen nicht-invertierender Eingang über einen Widerstand mit der Elektrode verbunden ist und dessen invertierender Eingang über einen weiteren Widerstand am nicht-invertierenden Eingang des Impedanzwandlers und über einen Rückkopplungswiderstand am eigenen Ausgang liegt, und ferner durch Folgendes: einen zusätzlichen Widerstand, über den der invertierende Eingang des zur ersten Elektrode gehörenden Operationsverstärkers mit dem invertierenden Eingang des zur zweiten Elektrode gehörenden Operationsverstärkers verbunden ist, sowie eine Zeitsteuerung zur Erzeugung eines Signals, das die Schalter dazu veranlaßt, den Ausgang der Spannungsquelle an je einen Eingang der Impedanzwandler anzulegen.

In der zwar prioritätsälteren, jedoch nicht vorveröffentlichten und daher nur nach Art. 54(3) EPÜ relevanten WO-A 88/07194 ist ein elektrisches Reinigungsverfahren für die Indikatorelektrode eines Titrators beschrieben. Dabei wird eine niederfrequente Wechselspannung von 1 Hz bis 10 Hz unter Abschaltung des Meßkreises solange über Schalter, z.B. Relais, angelegt, bis die Elektrode gereinigt ist.

Durch diese zusätzliche Beschaltung wird allerdings der von der Elektrode gebildete Kreis insb. kapazitiv belastet. Dies ist vor allem bei der magnetisch-induktiven Durchflußmessung, bei der die das Strömungsmedium berührenden Elektroden ein Meßsignal erzeugen (vgl. das von der Patentinhaberin herausgegebene Buch "Durchfluss-Fibel", 1985, Seiten 15 ff.), störend. Die Elektroden stellen nämlich eine Spannungsquelle dar, deren Innenwiderstand insb. von der Geometrie des magnetisch-induktiven Aufnehmers und der Leitfähigkeit des Mediums abhängt. Je größer der Innenwiderstand ist, desto empfindlicher ist die Elektrode gegen externe Beschaltung. Außerdem können Schalter Störspannungen erzeugen, deren Auswirkungen auf das Elektrodensignal unerwünscht sind.

Der Erfindung liegt somit das Problem zugrunde, die Elektrode und/oder deren Verbindungs-/Signalleitungen von Störeinflüssen zu befreien, die von der Beschaltung zum Anlegen der Spannung an die Elektrode ausgehen.

Dies wird nach der Erfindung dadurch erreicht, daß mindestens während der Zeitspanne, in der die Spannung nicht angelegt ist, ungefähr das Potential der Elektrode auf diejenigen Anschlüsse der Schalter gekoppelt wird, die nicht der Elektrode zugeordnet, also nicht mit ihr verbunden sind. Dadurch werden im ausgeschalteten, also im die Verbindung zur Reinigungsspannung unterbrechenden, Zustand der Schalter Potentialunterschiede zwischen dem der Reinigungsspannung und dem der Elektrode zugeordneten Anschluß vernachlässigbar klein gemacht. Mithin können unvermeidliche kapazitive Komponenten der Schalter das Elektrodensignal nicht mehr unzulässig belasten. Die Mittel zur Kopplung des Potentials der Elektrode(n) zu den Schaltern werden zweckmässig mit aktiven Komponenten, z. B. Operationsverstärkern, realisiert. Dadurch wird der Vorteil erzielt, dass etwaige, vom Schaltelement ausgehende Störspannungen durch den Ausgang der aktiven Komponente weitgehend kompensiert werden können.

Die erfindungsgemässe Schaltungsanordnung lässt sich vorteilhaft dort einsetzen, wo Elektroden zu Messzwecken mit strömendem Medium in Berührung stehen und dabei verschmutzen. Dies ist besonders in der magnetisch-induktiven Durchflussmessung der Fall, wo die Elektroden zur Erzeugung eines Messsignals dienen, wie z.B. aus der EP-A 219 725 hervorgeht. Dort lässt sich das Durchschalten der Reinigungsspannung wie folgt in einen Messzyklus einbauen:
- ein von den Elektroden herrührendes Messsignal wird vor dem Anlegen der Reinigungsspannung gespeichert und/oder als Messwert ausgegeben;
- die Reinigungsspannung wird für eine bestimmte, wählbare Dauer und in bestimmten, wählbaren Intervallen an die Elektroden angelegt;
- nach dem Abschalten der Reinigungsspannung wird die Aufnahme des Messbetriebs um eine Pause verzögert, in der sich die elektrochemischen Verhältnisse an der gereinigten Elektrode normalisieren können; und
- nach dieser Pause wird der Messbetrieb wieder aufgenommen.

Bei der Erfindung ist ein Impedanzwandler mit hoher Eingangs- und niedriger Ausgangsimpedanz vorgesehen, dessen Ausgang mit einem nicht mit der Elektrode in Verbindung stehenden Anschluss des an der Elektrode liegenden Schalters verbunden ist. Der Eingang des Impedanzwandlers kann entweder direkt an der Elektrode oder deren Verbindungssignalleitung angeschlossen sein oder mittels gesonderter Koppelglieder (z. B. Operationsverstärkerschaltungen) näherungsweise auf das Elektrodenpotential getrieben werden.

Nach der zweiten Variante der Erfindung wird dem Eingang des Impedanzwandlers - parallel zur Zuführung des Elektrodenpotentials - noch die Gleich- oder die Wechselspannungsquelle zur Erzeugung der Reinigungsspannung zugeschaltet. Dabei sind zwischen dem Ausgang der Spannungsquelle und dem Eingang des Impedanzwandlers Schalter vorgesehen, welche durch eine Zeitsteuerung intermittierend angesteuert werden.

Nach einem Ausführungsbeispiel der ersten Variante der Erfindung/ist ein nicht mit der Elektrode oder deren Leitung in Verbindung stehender Anschluss des Schalters sowohl dem Ausgang der Spannungsquelle als auch dem Ausgang des Impedanzwandlers zugeordnet. Dies kann einerseits durch einen Umschalter verwirklicht werden, der den Ausgang der Reinigungsspannungsquelle intermittierend zwischen einem Anschluss zur Elektronik und dem Ausgang des Impedanzwandlers hin- und herschaltet. Andererseits kann der Ausgang des Impedanzwandlers dauernd einen nicht mit der Elektrode verbundenen Anschluss des Schalters kontaktieren, wobei die Reinigungsspannung auf den Ausgang des Impedanzwandlers intermittierend durchgeschaltet wird.

Gemäss einer Ausgestaltung der zweiten Variante sind die Spannungsquelle zur Erzeugung der Reinigungsspannung und der Impedanzwandler miteinander schaltungstechnisch zu einer Einheit integriert. Dies kann z. B. durch einen mit einem Gegenkopplungswiderstandsnetzwerk beschalteten Operationsverstärker erfolgen, bei dem wenigstens ein die Verstärkung beeinflussender Widerstandswert intermittierend veränderbar ist. Solchenfalls wird während der Zeitphase, in der keine Reinigung stattfindet, der Operationsverstärker als Impedanzwandler mit der Verstärkung eins betrieben; während der Reinigungsphase wird die Verstärkung durch Beeinflussung des genannten Widerstandes entsprechend der notwendigen Reinigungsspannung erhöht.

Die erfindungsgemässen Schaltungsanordnungen eignen sich besonders zum Einsatz in magnetisch-induktiven Durchflussmessgeräten oder in Messstoffüberwachungsgeräten, bei denen jeweils mit dem Medium in Berührung stehende Elektroden zur Erzeugung eines Messsignals verwendet werden.

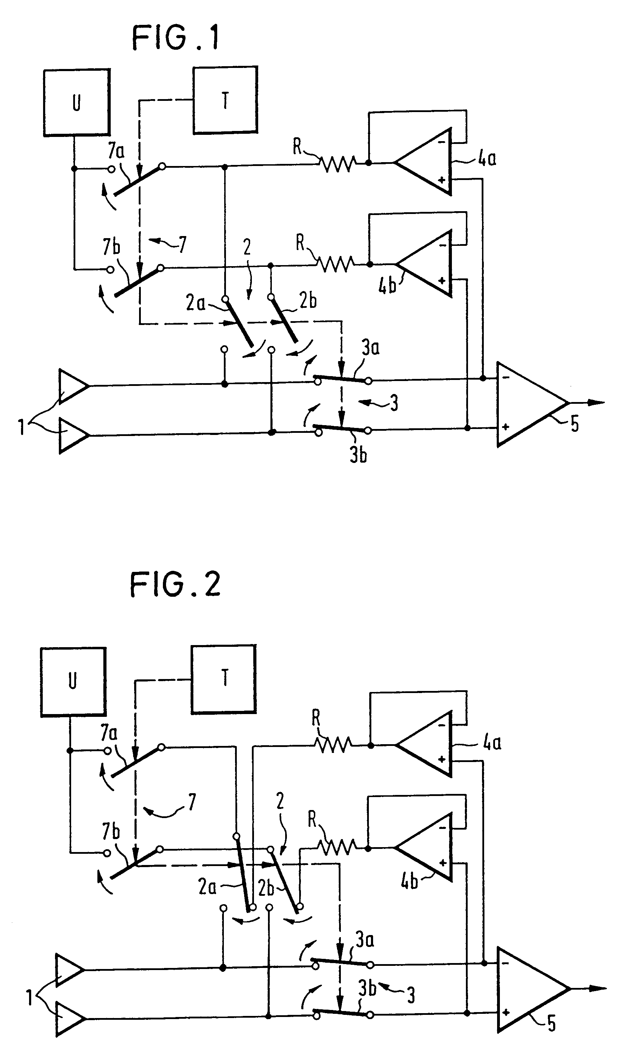

Wegen weiterer Vorteile und Ausbildungen der Erfindung wird auf die Unteransprüche und die Beschreibung von Ausführungs beispielen anhand der Zeichnung verwiesen. Es zeigen
Figur 1
   eine Schaltungsanordnung gemäss der ersten Variante der Erfindung;
Figur 2
   eine Weiter bildung der Schaltungsanordnung von Fig. 1 und
Figur 3
   eine Schaltungsanordnung gemäss der zweiten Variante der Erfindung.

Uebereinstimmende Schaltungsteile sind mit übereinstimmenden Bezugszeichen versehen.

Die Figuren 1 bis 3 zeigen jeweils eine Schaltungsanordnung für zwei Elektroden, was einen typischen Fall der magnetisch-induktiven Durchflussmessung darstellt.

Nach Figur 1 sind die beiden Elektroden 1 an einen Schalter 2 und einen Schalter 3 angeschlossen, die jeweils zwei als Unterbrecher ausgebildete Kontaktelemente 2a, 2b, 3a, 3b aufweisen. Ferner ist ein Schalter 7 mit zwei Kontaktelementen 7a, 7b vorgesehen, welcher zwischen einer Spannungsquelle U zur Erzeugung der Spannung für die Elektrodenreinigung und dem ersten Schalter 2 angeordnet ist; die Schalter 2, 7 liegen somit in Serie. Die beiden Kontaktelemente 2a, 2b, 3a, 3b, 7a, 7b eines jeden Schalters 2, 3, 7 sind jeweils einer der beiden Elektroden 1 zugeordnet. Ihre Bewegungsrichtungen sind in Figur 1 durch Pfeile angedeutet. Ihre Bewegungen werden zueinander zeitlich synchron von einer Zeitsteuerung T gesteuert. Die Anschlüss der beiden Kontakt elemente 3a, 3b des Schalters 3 , die nicht an die Elektroden 1 angeschlossen sind, sind mit jeweils einem Eingang eines ersten und eines zweiten Impedanzwandlers 4a, 4b verbunden. Die Impedanzwandler weisen einen hohen Eingangs- und einen niedrigen Ausgangswiderstand auf und können als rückgekoppelte Operationsverstärker realisiert sein. Die beiden genannten Anschlüsse sind zudem mit je einem Eingang eines Differenzverstärkers 5 zur Aufbereitung der Elektrodenpotentiale verbunden. Die beiden Impedanzwandler 4a, 4b weisen an ihren Ausgängen bevorzugt je einen Widerstand R zur Strombegrenzung auf. Die Widerstände R führen die Ausgänge der Impedanzwandler 4a, 4b zu den entsprechenden, nicht mit den Elektroden 1 bzw. mit der Spannungsquelle U verbundenen Anschlüssen der Kontaktelemente 2a, 2b bzw. 3a, 3b des Schalters 2 bzw. 3 .

Die Funktionsweise der Schaltung nach Figur 1 wird nun kurz erläutert. In der gezeichneten Stellung unterbrechen die Schalter 2, 7 die Verbindung von der Spannungsquelle U zu den Elektroden, während der Schalter 3 eine Verbindung der Elektroden 1 mit dem Differenzverstärker 5 herstellt. Die Elektroden befinden sich also nicht im Reinigungs-, sondern im Messbetriebszustand. Der Schalter 3 dient dazu, im Falle des Anliegens der Reinigungsspannung U diese vom Differenzverstärker 5 fernzuhalten, um dessen übermässige Belastung zu vermeiden.

Sollen nun die beiden Elektroden 1 elektrisch gereinigt werden, steuert die Zeitsteuerung T die Schalter 2, 7 derart an, dass deren Kontaktelemente 2a, 2b, 7a, 7b schliessen, um die Spannung U den Elektroden 1 zu deren Reinigung zuzuführen. Gleichzeitig sind die Kontaktelemente 3a, 3b des Schalters in Unterbrechungsstellung gebracht.

Im normalen Messbetrieb, der in Figur 1 gezeichnet ist, sorgen die Impedanzwandler 4a, 4b dafür, dass zwischen den elektrodenseitigen Anschlüssen und den von den Elektroden 1 abgewandten Anschlüssen des Schalters 2 während des Messbetriebs nahezu keine Potentialdifferenzen vorhanden sind. Infolgedessen finden über die Anschlüsse des Schalters 2 nahezu keine Spannungsänderungen statt, so dass sich im Schalter vorhandene parasitäre Kapazitäten nicht auf von den Elektroden 1 abgegriffene Signale auswirken können.

Die Schaltungsanordnung der Figur 2 unterscheidet sich von der nach Figur 1 im wesentlichen dadurch, dass im Schalter 2 die beiden Kontaktelemente 2a, 2b als Umschalter zwischen den Ausgängen der Impedanzwandler 4a, 4b und den Elektroden 1 ausgebildet sind, wobei die statischen, d. h. feststehenden Anschlüsse mit dem Schalter 7 verbunden sind. In der gezeichneten Stellung herrscht Messbetrieb, d. h. an den Elektroden 1 liegt keine Reinigungsspannung. Störenden Kapazitäten, die im Schalter 2 vorhanden sind, wird durch die Potentialzuführung über die beiden Impedanzwandler 4a, 4b - entsprechend den Ausführungen zu Figur 1 - im wesentlichen die Wirkung genommen.

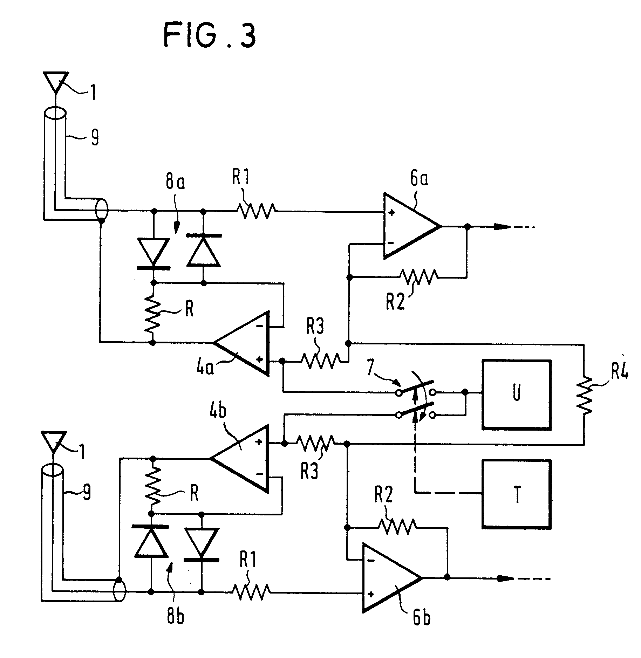

Die Schaltungsanordnung der Figur 3 unterscheidet sich von der nach Figur 1 im wesentlichen durch die andere Realisierung von Schalterfunktionen und die Anordnung eines ersten und zweiten Verstärkers 6a, 6b . Zwei Elektroden 1 sind jeweils über einen Widerstand R1 mit den nicht-invertierenden Eingängen je eines Operationsverstärkers 6a, 6b verbunden. Die Ausgänge der beiden Operationsverstärker 6a, 6b sind jeweils über einen Widerstand R2 zu deren invertierenden Eingängen zurückgekoppelt. Der invertierende Eingang des ersten Operationsverstärkers 6a ist über einen Widerstand R4 mit dem invertierenden Eingang des zweiten Operationsverstärkers 6b verbunden. Ferner sind die beiden invertierenden Eingänge der beiden Operationsverstärker 6a, 6b jeweils über einen Widerstand R3 mit je einem nicht-invertierenden Eingang eines ersten Impedanzwandlers 4a bzw. eines zweiten Impedanzwandlers 4b verbunden. Unmittelbar an die nicht-invertierenden Eingänge der beiden Impedanzwandler 4a, 4b ist über einen Schalter 7 der Ausgang einer Spannungsquelle U gelegt. Der Schalter 7 steht mit einer Zeitsteuerung T in Wirkungsverbindung. Der Ausgang des ersten Impedanzwandlers 4a ist mit einem ersten Diodenpaar 8a und der Ausgang des zweiten Impedanzwandlers 4b mit einem zweiten Diodenpaar 8b verbunden. Die Diodenpaare 8a, 8b sind jeweils aus zwei einzelnen Dioden gebildet. Diese beiden Dioden sind antiparallel geschaltet, das heisst, die Anode einer ersten Diode ist mit der Kathode einer zweiten Diode verbunden, während die Anode der zweiten Diode mit der Kathode der ersten Diode verbunden ist. Die Ausgänge der Impedanzwandler 4a, 4b liegen also über Strombegrenzungswiderstände R jeweils an einer Anode und einer Kathode je eines Diodenpaares 8a, 8b . Die nicht mit dem Ausgang des ersten Impedanzwandlers 4a verbundenen Anschlüsse der Dioden des ersten Diodenpaares 8a sind mit einer der beiden Elektroden 1 verbunden. Entsprechendes gilt für die andere der beiden Elektroden 1 . Elektroden leitungen umgebende Abschirmungen 9 können unmittelbar mit den Ausgängen der Impedanzwandler 4a, 4b elektrisch verbunden sein.

Es wird nun die Funktionsweise der Schaltung nach Figur 3 kurz erläutert. Der Schalter 7 befindet sich in der gezeichneten Stellung im geöffneten (unterbrechenden) Zustand. Das bedeutet, dass der Ausgang der Spannungsquelle U nicht an den Eingängen der beiden Impedanzwandler 4a, 4b angeschlossen ist. Vielmehr wird den Eingängen der Impedanzwandler 4a, 4b zumindest näherungsweise das jeweilige Potential zugeführt, auf welchem die beiden Elektroden 1 liegen. Dies erklärt sich dadurch, dass an die nicht-invertierenden Eingänge des ersten bzw. zweiten Operationsverstärkers 6a, 6b Elektrodenpotential über die Widerstände R1 herangeführt wird. Die Ausgänge der beiden Operationsverstärker 6a, 6b sind jeweils über Widerstände R2 und die invertierenden Eingänge auf die nicht-invertierenden Eingänge gegengekoppelt. Folglich werden die Spannungsdifferenzen zwischen den nicht-invertierenden Eingängen und den invertierenden Eingängen der jeweiligen Operationsverstärker 6a, 6b näherungsweise zu null geregelt, so dass an den invertierenden Eingängen der Operationsverstärker 6a, 6b etwa Elektrodenpotential liegt. Dieses wird über die Widerstände R3 an je einen Eingang der Impedanzwandler 4a, 4b gelegt. Diese übertragen ihre Eingangssignale näherungsweise mit dem Uebertragungsfaktor eins auf ihre Ausgänge. Die damit verbundenen Anschlüsse der Diodenpaare 8a, 8b befinden sich somit auf demselben Potential wie deren mit den Elektroden 1 direkt verbundene Anschlüsse. Dynamisch verlaufende Spannungsabfälle zwischen den Anschlüssen der Diodenpaare 8a, 8b , auf die parasitäre Kapazitäten ansprechen könnten, finden nicht mehr statt. Etwaige von den Dioden ausgehende Störspannungen aufgrund von Temperaturdrift etc. werden von den Ausgängen der Impedanzwandler kompensiert. Das von den Elektroden über die Widerstände (R1) abgeleitete Messsignal ist nach alledem von Störeinflüssen durch die Diodenpaare 8a, 8b weitgehend entkoppelt.

Zur elektrischen Reinigung der Elektroden (1) erzeugt die Zeitsteuerung T ein Signal, das den Schalter 7 dazu veranlasst, den Ausgang der Spannungsquelle U an je einen Eingang der Impedanzwandler 4a, 4b zu legen. Die Impedanzwandler übertragen die angelegte Spannung von der Spannungsquelle U mit dem Uebertragungsfaktor eins. Dies bedeutet, dass jeweils eine Diode der beiden Diodenpaare 8a, 8b aufgrund Erreichens ihrer Schwellenspannung in den Durchlasszustand versetzt wird. Die von der Spannungsquelle U herrührende Reinigungsspannung gelangt somit an die Elektroden 1 . Erzeugt die Spannungsquelle U eine bipolare Wechselspannung, so wird in jedem der Diodenpaare 8a, 8b die eine Diode, mit der anderen abwechselnd, in den Durchlasszustand versetzt. Aufgrund der antiparallelen Anordnung der Dioden der Diodenpaare 8a, 8b können die Elektroden somit auch mit einer Wechselspannung als Reinigungsspannung beaufschlagt werden.

Gemäss Figur 3 können die Impedanzwandler 4a, 4b zusätzlich dazu verwendet werden, die Abschirmungen 9 auf das Elektrodenpotential zu treiben, um Abschirmkapazitäten und Abschirmungsrauschen gegebenenfalls zu kompensieren.

## Patentansprüche

1. Schaltungsanordnung zum Reinigen einer einen Stoff berührenden, ein zu messendes Potential aufweisenden Elektrode (1) durch Anlegen einer elektrischen Gleich- oder Wechselspannung,
gekennzeichnet durch
- eine Spannungsquelle (U) zum Anlegen der Gleich- oder der Wechselspannung an die Elektrode über zwei in Serie liegende Schalter (2, 7) mit je einem Kontaktelement (2a, 7a; 2b, 7b),
-- wobei der erste Schalter (7) an die Spannungsquelle und der zweite Schalter (2) an die Elektrode angeschlossen ist,
- eine Zeitsteuerung (T) zum zeitlich synchronen Bewegen der Kontaktelemente (2a, 7a; 2b, 7b), wodurch eine Verbindung der Spannungsquelle mit der Elektrode mittels des ersten und des zweiten Schalters gleichzeitig hergestellt oder gleichzeitig unterbrochen werden kann, und
- einen Impedanzwandler (4a, 4b) mit hoher Eingangs- und niedriger Ausgangsimpedanz, dessen Eingang an die Elektrode angeschlossen ist und dessen Ausgang mindestens während der Zeitspanne, in der die Verbindung der Spannungsquelle mit der Elektrode gleichzeitig am ersten und am zweiten Schalter unterbrochen ist, mit dem Kontaktelement (2a; 2b) des zweiten Schalters (2) verbunden ist.

2. Schaltungsanordnung nach Anspruch 1, bei der die Elektrode (1) zu Durchflußmeßzwecken ein strömendes Medium berührt und die Gleich- oder die Wechselspannung (U) mit vorgegebener Periodendauer an die Elektrode (1) gelegt ist.

3. Schaltungsanordnung nach Anspruch 2, bei der vor dem Durchschalten der Gleich- oder der Wechselspannung (U) zur Elektrode (1) deren Potential als Meßsignal gespeichert und/oder ausgegeben sowie nach beendigtem Durchschalten und einer Verzögerungszeit der Meßbetrieb wieder aufgenommen wird.

4. Schaltungsanordnung nach einem der Ansprüche 1 bis 3, bei der zur Strombegrenzung ein Widerstand (R) am Ausgang des Impedanzwandlers (4a, 4b) vorgesehen ist.

5. Schaltungsanordnung nach einem der Ansprüche 1 bis 4, bei der die Schalter (2, 7) mittels eines Relais realisiert sind und der Ausgang des Impedanzwandlers (4a, 4b) auch an dessen Spule gelegt ist, während die Gleich- oder die Wechselspannung (U) nicht zur Elektrode (1) durchgeschaltet ist.

6. Schaltungsanordnung zum Reinigen zweier einen Stoff berührenden, zu messende Potentiale aufweisenden Elektroden (1) durch Anlegen einer elektrischen Gleich- oder Wechselspannung, gekennzeichnet
- durch eine Spannungsquelle (U) zum Anlegen der Gleich- oder der Wechselspannung und
- durch Folgendes pro Elektrode:
-- einen Schalter (7) zum Durchschalten der Gleich- oder der Wechselspannung an die Elektrode,
-- einen Impedanzwandler (4a, 4b) mit hoher Eingangs- und niedriger Ausgangsimpedanz, dessen nicht-invertierender Eingang über den Schalter an die Spannungsquelle anlegbar ist,
-- eine Serienschaltung aus einem Strombegrenzungswiderstand (R) und einer Diode oder zwei antiparallelgeschalteten Dioden (8a, 8b), wobei der Ausgang des Impedanzwandlers über die Serienschaltung an der Elektrode angeschlossen ist und der Verbindungspunkt von Strombegrenzungswiderstand und Diode/Dioden am invertierenden Eingang des Impedanzwandlers liegt, sowie
-- einen Operationsverstärkers (6a, 6b), dessen nicht-invertierender Eingang über einen Widerstand (R1) mit der Elektrode verbunden ist und dessen invertierender Eingang über einen weiteren Widerstand (R3) am nicht-invertierenden Eingang des Impedanzwandlers und über einen Rückkopplungswiderstand (R2) am eigenen Ausgang liegt, und
- und ferner durch Folgendes:
-- einen zusätzlichen Widerstand (R4), über den der invertierende Eingang des zur ersten Elektrode gehörenden Operationsverstärkers (6a) mit dem invertierenden Eingang des zur zweiten Elektrode gehörenden Operationsverstärkers (6b) verbunden ist, sowie
-- eine Zeitsteuerung (T) zur Erzeugung eines Signals, das die Schalter (7) dazu veranlaßt, den Ausgang der Spannungsquelle (U) an je einen Eingang der Impedanzwandler (4a, 4b) anzulegen.

7. Schaltungsanordnung nach Anspruch 6, bei der der Impedanzwandler und die Quelle der Gleich- oder der Wechselspannung (U) baulich zu einer Verstärkereinheit vereinigt sind, deren Verstärkung zwischen eins oder größer als eins umschaltbar ist.

8. Schaltungsanordnung nach einem der Ansprüche 1 bis 7, bei der der Ausgang des Impedanzwandlers (4a, 4b) auch mit einer Abschirmung der Signalleitung der Elektroden (1) verbunden ist.

9. Verwendung einer Schaltungsanordnung nach einem der Ansprüche 1 bis 8 bei einem magnetisch-induktiven Durchflußmesser mit das strömende Medium berührenden Meßelektroden oder bei einem Meßstoffüberwachungsgerät mit Elektroden zur Messung der Leitfähigkeit eines Stoffes, zu welchen Elektroden die Gleich- oder die Wechselspannung (U) intermittierend durchgeschaltet wird.

## Claims

1. A circuit arrangement for cleaning an electrode (1) which is in contact with a substance and has a potential to be measured, by applying a direct or alternating voltage,
characterized by
- a voltage source (U) for applying the direct or alternating voltage to the electrode through two series-connected switches (2, 7) each having one contact element (2a, 7a; 2b, 7b),
-- with the first switch (7) connected to the voltage source, and the second switch (2) to the electrode,
- a timer (T) for synchronously moving the contact elements (2a, 7a; 2b, 7b), whereby a connection between the voltage source and the electrode can be closed simultaneously or opened simultaneously by means of the first and the second switch, and
- an impedance transformer (4a, 4b) having a high input impedance and a low output impedance whose input is connected to the electrode, and whose output is coupled to the contact element (2a; 2b) of the second switch (2) at least during the period in which the connection between the voltage source and the electrode is open simultaneously at the first and the second switch.

2. A circuit arrangement as claimed, in claim 1 wherein for flow-measurement purposes, the electrode (1) contacts a fluid, and wherein the direct or alternating voltage (U) is applied to the electrode (1) with a predetermined period.

3. A circuit arrangement as claimed in claim 2, wherein prior to the connection of the direct or alternating voltage (U) to the electrode (1), the potential of the electrode (1) is stored and/or output as a measurement signal, and wherein after a time delay following the end of the disconnection, the measuring operation is resumed.

4. A circuit arrangement as claimed in any one of claims 1 to 3 wherein a current-limiting resistor (R) is provided at the output of the impedance transformer (4a, 4b).

5. A circuit arrangement as claimed in any one of claims 1 to 4 wherein the switches (2, 7) are implemented with a relay, and wherein the output of the impedance transformer (4a, 4b) is also connected to the coil of the relay while the direct or alternating voltage (U) is not connected to the electrode (1).

6. A circuit arrangement for cleaning two electrodes (1) which are in contact with a substance and have potentials to be measured, by applying a direct or alternating voltage,
characterized
- by a voltage source (U) for applying the direct or alternating voltage, and
- by the following per electrode:
-- a switch (7) for connecting the direct or alternating voltage to the electrode,
-- an impedance transformer (4a, 4b) having a high input impedance and a low output impedance whose noninverting input is connectable through the switch to the voltage source,
-- a series combination of a current-limiting resistor (R) and a diode or two diodes (8a, 8b) connected in inverse parallel, with the output of the impedance transformer connected through the series combination to the electrode, and the junction of the current-limiting resistor and the diode/diodes connected to the inverting input of the impedance transformer, and
-- an operational amplifier (6a, 6b) whose noninverting input is connected through a resistor (R1) to the electrode,and whose inverting input is connected through an additional resistor (R3) to the noninverting input of the impedance transformer and through a feedback resistor (R2) to the output of the operational amplifier,
- and further by the following:
-- an additional resistor (R4) through which the inverting input of the operational amplifier (6a) associated with the first electrode is connected to the inverting input of the operational amplifier (6b) associated with the second electrode, and
-- a timer (T) for generating a signal which causes the switch (7) to apply the output of the voltage source (U) to one input of each of the impedance transformers (4a, 4b).

7. A circuit arrangement as claimed in claim 6 wherein the impedance transformer and the source of direct or alternating voltage (U) are physically combined into an amplifier unit whose gain is switchable between unity or greater than unity.

8. A circuit arrangement as claimed in any one of claims 1 to 7 wherein the output of the impedance transformer (4a, 4b) is also connected to a shield of the signal line of the electrodes (1).

9. Use of a circuit arrangement as claimed in any one of claims 1 to 8 in a magnetic flowmeter having measuring electrodes contacting the fluid, or in a measured-substance-monitoring device having electrodes for measuring the conductivity of a substance, the direct or alternating voltage (U) being connected to said electrodes intermittently.

## Revendications

1. Circuit destiné au nettoyage d'une électrode (1) en contact avec une substance et présentant un potentiel à mesurer, par l'application d'une tension électrique continue ou alternative, caractérisé par
- une source de tension (U) destinée à l'application de la tension continue ou alternative à l'électrode, par l'intermédiaire de deux commutateurs (2, 7) montés en série et comportant chacun un élément de contact (2a, 7a; 2b, 7b),
-- le premier commutateur (7) étant relié à la source de tension et le second commutateur (2) à l'électrode,
- une commande de temps (T) pour déplacer les éléments de contact (2a, 7a; 2b, 7b) de manière synchronisée dans le temps, en permettant ainsi d'établir ou d'interrompre simultanément au moyen du premier commutateur et du second commutateur, une liaison entre la source de tension et l'électrode,
- et un adaptateur d'impédance (4a, 4b) à impédance d'entrée élevée et à faible impédance de sortie, dont l'entrée est reliée à l'électrode, et dont la sortie est reliée à l'élément de contact (2a; 2b) du second commutateur (2) au moins pendant l'intervalle de temps au cours duquel la liaison entre la source de tension et l'électrode est interrompue simultanément au niveau du premier et du second commutateur.

2. Circuit selon la revendication 1, dans lequel l'électrode (1), dans un but de mesure de débit, est en contact avec un fluide qui s'écoule, et la tension continue ou alternative (U) est appliquée à l'électrode (1) pendant une durée périodique prédéfinie.

3. Circuit selon la revendication 2, dans lequel avant l'application de la tension continue ou alternative (U) à l'électrode (1), le potentiel de celle-ci est mémorisé et/ou délivré, et dans lequel le fonctionnement en mode mesure reprend après la fin de l'application de la tension et une durée de temporisation.

4. Circuit selon l'une des revendications 1 à 3, dans lequel une résistance (R) est prévue à la sortie de l'adaptateur d'impédance (4a, 4b) pour la limitation du courant.

5. Circuit selon l'une des revendications 1 à 4, dans lequel les commutateurs (2, 7) sont réalisés par un relais, et dans lequel la sortie de l'adaptateur d'impédance (4a, 4b) est également reliée à la bobine de celui-ci pendant que la tension continue ou alternative (U) n'est pas appliquée à l'électrode (1).

6. Circuit destiné au nettoyage de deux électrodes (1) en contact avec une substance et présentant un potentiel à mesurer, par l'application d'une tension électrique continue ou alternative, caractérisé par
- une source de tension (U) destinée à l'application de la tension continue ou alternative,
- par les éléments suivants pour chaque électrode:
-- un commutateur (7) pour appliquer la tension continue ou alternative à l'électrode,
-- un adaptateur d'impédance (4a, 4b) à impédance d'entrée élevée et à faible impédance de sortie, dont l'entrée non inverseuse peut être reliée à la source de tension, par l'intermédiaire du commutateur,
-- un circuit série composé d'une résistance de limitation du courant (R) et d'une diode ou deux diodes (8a, 8b) montées de manière anti-parallèle, la sortie de l'adaptateur d'impédance étant raccordée à l'électrode par l'intermédiaire du circuit série, le point de connexion entre la résistance de limitation du courant et la ou les diodes étant relié à l'entrée inverseuse de l'adaptateur d'impédance,
-- un amplificateur opérationnel (6a, 6b) dont l'entrée non inverseuse est reliée à l'électrode par l'intermédiaire d'une résistance (R1), et dont l'entrée inverseuse est reliée, par l'intermédiaire d'une autre résistance (R3), à l'entrée non inverseuse de l'adaptateur d'impédance, et à sa propre sortie par l'intermédiaire d'une résistance de contre-réaction (R2), et
- par ailleurs, par les éléments suivants:
-- une résistance supplémentaire (R4) par l'intermédiaire de laquelle l'entrée inverseuse de l'amplificateur opérationnel (6a) affecté à la première électrode, est reliée à l'entrée inverseuse de l'amplificateur opérationnel (6b) affecté à la seconde électrode,
-- ainsi qu'une commande de temps (T) pour produire un signal qui conduit les commutateurs (7) à appliquer la sortie de la source de tension (U), à une entrée de chacun des adaptateurs d'impédance (4a, 4b).

7. Circuit selon la revendication 6, dans lequel l'adaptateur d'impédance et la source de la tension continue ou alternative (U) sont, quant à leur réalisation, réunis en un module amplificateur, dont le gain peut être commuté d'une valeur égale à un à une valeur supérieure à un.

8. Circuit selon l'une des revendications 1 à 7, dans lequel la sortie de l'adaptateur d'impédance (4a, 4b) est également reliée à un blindage du conducteur de transmission des signaux des électrodes (1).

9. Application d'un circuit selon l'une des revendications 1 à 8, à un débitmètre magnéto-inductif comportant des électrodes de mesure en contact avec le fluide qui s'écoule, ou à un appareil de contrôle d'une substance à mesurer comportant des électrodes pour la mesure de la conductivité d'une substance, électrodes auxquelles est appliquée de manière intermittente, la tension continue ou alternative (U).
